# FASCICULE DE BREVET EUROPEEN

(11) **EP 3 727 877 B1**
(45) Date de publication et mention de la délivrance du brevet: **15.03.2023**
(21) Numéro de dépôt: 18833466.8
(22) Date de dépôt: 11.12.2018
(51) Int. Cl.: B60C 1/00, C08K 3/36, C08L 15/00

(54) **COMPOSITION DE CAOUTCHOUC RÉTICULÉE PAR UN DIACIDE ET COMPRENANT UN COMPOSÉ PHÉNOLIQUE**
DISÄUREVERNETZTE KAUTSCHUKZUSAMMENSETZUNG MIT EINER PHENOLISCHEN VERBINDUNG
DIACID-CROSSLINKED RUBBER COMPOSITION COMPRISING A PHENOLIC COMPOUND

(30) Priorité: 21.12.2017 FR 1762730
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 Clermont-ferrand Cedex 9 (FR); GAVARD-LONCHAY, Odile, 63040 Clermont-ferrand Cedex 9 (FR)
(74) Mandataire: Louret, Sylvain
(86) Numéro de dépôt international: PCT/FR2018/053177
(87) Numéro de publication internationale: WO 2019/122587

(56) Documents cités:
- EP-A1- 3 006 206
- WO-A1-2014/191315
- FR-A- 1 455 608
- DATABASE WPI Week 201201 Thomson Scientific, London, GB; AN 2011-Q19696 XP002784545, & JP 2011 252107 A (YOKOHAMA RUBBER CO LTD) 15 décembre 2011 (2011-12-15)
- DATABASE WPI Week 201533 Thomson Scientific, London, GB; AN 2015-20248V XP002784546, & CN 104 327 316 A (EVEN RUBBER INST CO LTD) 4 février 2015 (2015-02-04)

## Description

### Domaine technique de l'invention

La présente invention est relative aux compositions de caoutchouc à base d'élastomères comportant des fonctions époxydes, aux composites comprenant de telles compositions, ainsi qu'aux pneumatiques comprenant de telles compositions ou de tels composites.

### Art antérieur

Les nappes de renforcement des pneumatiques comprennent habituellement un mélange caoutchoutique et des câbles de renforcement, souvent métalliques et recouverts en surface de laiton. L'adhésion entre le mélange caoutchoutique et les câbles métalliques se créé via le phénomène de sulfuration de la surface laitonnée du câble. Cependant, l'interphase créée peut évoluer sous l'effet de l'humidité, de la température ou d'éléments corrosifs.

La fonction d'adhésion impose généralement des formulations spécifiques au mélange caoutchoutique, notamment la nécessité d'un taux de soufre et d'oxyde de zinc élevé, une faible quantité d'acide stéarique, la présence de sel de cobalt, l'emploi d'accélérateur à phase retard longue.

Une préoccupation constante des manufacturiers de pneumatique est donc de trouver des formulations permettant de s'affranchir du soufre dans les composites tout en permettant une bonne adhésion sur les câbles de renforcement.

Le document WO 2014/095586 décrit un pneumatique comprenant une composition de caoutchouc à base d'au moins un élastomère comprenant des fonctions époxyde, un système de réticulation comprenant un polyacide carboxylique et un imidazole visant à simplifier les compositions par rapport à d'autres systèmes de réticulation et à améliorer les propriétés hystérétiques. Ce document n'adresse pas le problème d'adhésion de la composition à des câbles.

La demande JP 2011252107 décrit une composition de caoutchouc ayant une bonne adhésion au métal, cette composition comprenant un élastomère diénique et du sel de cobalt. De l'acide gallique ou un hydrate d'acide gallique facilite la dissociation du sel de cobalt. La composition est réticulée avec un système à base de soufre.

Poursuivant ses recherches, la demanderesse a découvert une composition de caoutchouc à base d'au moins un élastomère comprenant des fonctions époxyde, au moins une charge renforçante, un système de réticulation comprenant un polyacide carboxylique, un imidazole et au moins un composé phénolique spécifique présentant des caractéristiques d'adhésions à un élément de renfort particulièrement intéressantes, en particulier pour la constitution de composites destinés à des pneumatiques. La composition selon l'invention permet ainsi d'obtenir une excellente adhésion aux éléments de renfort ne nécessitant ni vulcanisation ou sulfuration, ni présence de sels de cobalt.

### Description détaillée de l'invention

L'invention concerne une composition de caoutchouc à base d'au moins un élastomère comprenant des fonctions époxyde, au moins une charge renforçante, un système de réticulation comprenant un polyacide carboxylique de formule générale (I) 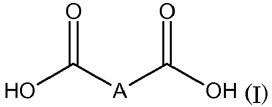 dans laquelle A représente une liaison covalente ou un groupement hydrocarboné comportant au moins 1 atome de carbone, éventuellement substitué et éventuellement interrompu par un ou plusieurs hétéroatomes, un imidazole de formule générale (II) 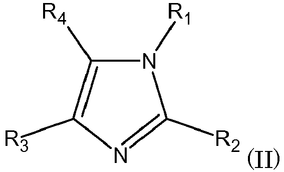 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné, ou encore R₃ et R₄ forment ensemble, avec les atomes de carbone du cycle imidazole auxquels ils se rattachent, un cycle,
et au moins un composé phénolique de formule générale (III) 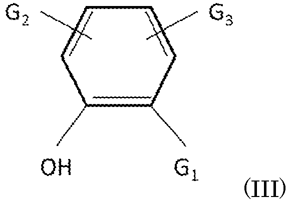 dans laquelle :
- G₁ représente un groupe hydroxyle, carboxyle, hydrogénocarbonyle, amino ou un radical aminoalkyle ;
- G₂ et G₃ représentent indépendamment l'un de l'autre un atome d'hydrogène, ou un groupe choisi parmi les groupes carboxyle, hydrogénocarbonyle et hydroxyle, ou un radical choisi parmi les radicaux alkyle, cycloalkylalkyle, aryle, aralkyle, aryloxy, alcoxyle, carboxylalkyle, carbonylalkyle, alkylcarbonyle, arylcarbonyle et aminoalkyle ;
le noyau aromatique dudit composé phénolique de formule générale (III) étant substitué par au moins un groupe carboxyle, un groupe hydrogénocarbonyle, un groupe amino ou un radical aminoalkyle.

### Définitions

Par l'expression "composition à base de", il faut entendre une composition comportant le mélange et/ou le produit de réaction in situ des différents constituants utilisés, certains de ces constituants (de base) pouvant réagir et/ou étant destinés à réagir entre eux, au moins partiellement, lors des différentes phases de fabrication de la composition, modifiant la composition telle qu'elle est préparée au départ. Ainsi les compositions telles que mises en oeuvre pour l'invention peuvent être différentes à l'état non réticulé et à l'état réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Par l'expression « équivalent molaire », bien connue de l'Homme du métier, il faut entendre le quotient entre le nombre de moles du composé ou d'une fonction concerné et le nombre de moles du composé ou de fonction de référence. Ainsi, 2 équivalents d'un composé ou de fonction B par rapport à un composé ou une fonction A représentent 2 moles du composé ou de fonction B lorsqu'une mole du composé ou de fonction A est utilisée.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Élastomère comprenant des fonctions époxyde

Par élastomère ou caoutchouc (les deux termes étant de manière connue synonymes et interchangeables) comprenant des fonctions époxydes, on entend tout type d'élastomère au sens connu de l'homme de l'art, qu'il s'agisse d'un homopolymère ou d'un copolymère à bloc, statistique ou autre, ayant des propriétés élastomériques, fonctionnalisé époxyde (ou époxydé), c'est-à-dire porteur de groupes fonctionnels époxydes. On utilise indistinctement les expressions « élastomère comprenant des fonctions époxydes » ou « élastomère époxydé ».

Les élastomères époxydés sont, de manière connue, solides à température ambiante (20°C) ; on entend par solide toute substance n'ayant pas la capacité de prendre à terme, au plus tard au bout de 24 heures, sous le seul effet de la gravité et à température ambiante (20°C), la forme du récipient qui la contient.

La température de transition vitreuse Tg des élastomères décrits dans le présent texte est mesurée de manière connue par DSC (Differential Scanning Calorimetry), par exemple et sauf indications différentes spécifiées, selon la norme ASTM D3418 de 1999.

La composition de caoutchouc conforme à l'invention peut contenir un seul élastomère époxydé ou un mélange de plusieurs élastomères époxydés (qu'on notera alors au singulier comme étant « l'élastomère époxydé » pour représenter la somme des élastomères époxydés de la composition), l'élastomère comprenant des fonctions époxydes pouvant être utilisé en association avec tout type d'élastomère non époxydé, par exemple diénique, voire avec des élastomères autres que des élastomères diéniques.

L'élastomère époxydé est majoritaire dans la composition de caoutchouc selon l'invention, c'est-à-dire qu'il est soit le seul élastomère, soit il est celui qui représente la plus grande masse, parmi les élastomères de la composition.

Selon un mode préférentiel de réalisation de l'invention, la composition de caoutchouc comprend de 30 à 100 pce, en particulier de 50 à 100 pce, de préférence 70 à 100 pce, d'élastomère époxydé majoritaire en coupage avec 0 à 70 pce, en particulier de 0 à 50 pce et de préférence 0 à 30 pce, d'un ou plusieurs autres élastomères, minoritaires, non époxydés.

Selon un autre mode préférentiel de réalisation de l'invention, la composition comporte pour la totalité des 100 pce d'élastomère, un ou plusieurs élastomères époxydés.

Le taux (% molaire) d'époxydation des élastomères époxydés peut varier dans une large part selon les modes de réalisation particuliers de l'invention, de préférence dans un domaine de 0,1% à 80%, préférentiellement dans un domaine de 0,1% à 50%, plus préférentiellement dans un domaine de 0,3% à 50%. Quand le taux d'époxydation est inférieur à 0,1%, l'effet technique visé risque d'être insuffisant tandis qu'au-delà de 80%, les propriétés intrinsèques du polymère sont dégradées. Pour toutes ces raisons, le taux de fonctionnalisation, notamment d'époxydation, est plus préférentiellement compris dans un domaine de 0,3% à 30%, avantageusement compris dans un domaine de 2,5% à 30%.

L'élastomère époxydé peut être choisi dans le groupe constitué par les élastomères diéniques époxydés, les élastomères oléfiniques époxydés et les mélanges de ces derniers. Préférentiellement, l'élastomère époxydé est choisi parmi les élastomères oléfiniques époxydés et les mélanges de ces derniers. Selon une autre variante préférentielle de l'invention, l'élastomère époxydé est choisi parmi les élastomères diéniques époxydés et les mélanges de ces derniers.

Par élastomère du type diénique époxydé, on rappelle que doit être entendu un élastomère qui est issu au moins en partie (i.e. un homopolymère ou un copolymère) de monomères diènes (monomères porteurs de deux doubles liaisons carbone-carbone, conjuguées ou non), ce polymère étant fonctionnalisé, c'est-à-dire qu'il est porteur de groupes fonctionnels époxydes.

Une première caractéristique des élastomères diéniques époxydés, est donc d'être des élastomères diéniques. Ces élastomères diéniques, par définition non thermoplastiques dans la présente demande, présentant une Tg dans la très grande majorité des cas qui est négative (c'est-à-dire inférieure à 0°C), peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et 70°C.

Une deuxième caractéristique essentielle de l'élastomère diénique époxydé utile aux besoins de l'invention, est qu'il est fonctionnalisé, porteur de groupes fonctionnels époxydes.

Les fonctions époxydes présentes dans l'élastomère diénique sont obtenues par copolymérisation ou par modification post-polymérisation, et seront soit portées directement par le squelette de la chaine, soit portées par un groupe latéral selon le mode d'obtention, par exemple par époxydation ou toute autre modification des fonctions diéniques présentes dans la chaine élastomérique après copolymérisation.

Les élastomères diéniques époxydés peuvent par exemple être obtenus de manière connue par époxydation de l'élastomère diénique non époxydé équivalent, par exemple par des procédés à base de chlorohydrine ou de bromohydrine ou des procédés à base de peroxydes d'hydrogène, d'alkyl hydroperoxydes ou de peracides (tel que acide peracétique ou acide performique), voir notamment Kautsch. Gummi Kunstst. 2004, 57(3), 82. Les fonctions époxydes sont alors dans la chaîne de polymère. On peut citer notamment les caoutchoucs naturels époxydés (en abrégé "ENR") ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Sartomer sous la dénomination "Poly Bd" (par exemple "Poly Bd 605E"). Les SBR époxydés peuvent être préparés par des techniques d'époxydation bien connues de l'homme du métier.

Des élastomères diéniques porteurs de groupes époxydes ont été décrits par exemple dans US 2003/120007 ou EP 0763564, US 6903165 ou EP 1403287.

Préférentiellement, l'élastomère diénique époxydé est choisi dans le groupe constitué par les caoutchoucs naturels (NR) époxydés (en abrégé "ENR"), les polyisoprènes (IR) de synthèse époxydés, les polybutadiènes (BR) époxydés ayant préférentiellement un taux de liaisons cis-1,4 supérieur à 90%, les copolymères de butadiène-styrène (SBR) époxydés et les mélanges de ces élastomères.

Les élastomères diéniques époxydés peuvent également présenter des fonctions époxydes pendantes. Dans ce cas, ils peuvent être obtenus soit par modification post-polymérisation (voir par exemple J. Appl. Polym. Sci. 1999, 73, 1733), ou par copolymérisation radicalaire des monomères diéniques avec des monomères porteurs de fonctions époxydes, notamment les esters de l'acide méthacrylique comportant des fonctions époxydes, comme par exemple le méthacrylate de glycidyle (cette polymérisation radicalaire, notamment en masse, en solution ou en milieu dispersé - notamment dispersion, émulsion ou suspension - est bien connue de l'homme du métier de la synthèse de polymères, citons par exemple la référence suivante : Macromolécules 1998, 31, 2822) ou par l'utilisation d'oxydes de nitrile porteurs de fonctions époxydes. Par exemple, le document US20110098404 décrit la copolymérisation en émulsion du 1,3-butadiène, du styrène et du méthacrylate de glycidyle.

Par élastomère du type oléfinique époxydé, on rappelle que doit être entendu un élastomère fonctionnalisé époxyde, c'est-à-dire qu'il est porteur de groupes fonctionnels époxydes, et dont la chaine élastomérique est une chaine carbonée comportant majoritairement des unités monomériques oléfine notés O.

Les monomères O peuvent provenir de toute oléfine connue par l'homme de l'art, comme par exemple, l'éthylène, le propylène, le butylène, l'isobutylène, ces monomères étant éventuellement substitués par des groupes alkyles linéaires ou ramifiés.

Préférentiellement O est un motif éthylène [-CH2-CH2-], et dans ce cas préférentiel, l'élastomère oléfinique époxydé est un élastomère éthylénique époxydé, ce qui permet d'améliorer le compromis entre les performances de rigidité et d'hystérèse dans les compositions de caoutchouc selon l'invention.

Le taux molaire de O est supérieur à 50%. Plus précisément, le taux molaire de O est compris entre 50 et 95%, préférentiellement entre 65 et 85%. L'élastomère de type oléfinique au sens de la présente invention est donc un copolymère comportant également de 5 à 50% molaire de motifs non oléfiniques, c'est-à-dire différents de O.

Ces motifs non oléfiniques sont constitués en partie ou en totalité par des motifs porteurs des groupes fonctionnels époxydes, notés R, nécessaires aux besoins de l'invention.

Le taux (% molaire) de motif R des élastomères oléfiniques époxydés précédemment décrits peut varier dans une large part selon les modes de réalisation particuliers de l'invention, de préférence dans un domaine de 0,1% à 50%, préférentiellement dans un domaine de 0,3% à 50%, plus préférentiellement dans un domaine de 0,3% à 30%, mieux, dans un domaine de 0,3 à 30%, et très préférentiellement dans un domaine de 2,5 à 30%. Quand le taux de motifs R est inférieur à 0,1%, l'effet technique visé risque d'être insuffisant tandis qu'au-delà de 50%, l'élastomère ne serait plus majoritairement oléfinique.

Dans le cas où les motifs non oléfiniques ne sont pas intégralement des motifs R, d'autres motifs, notés A' sont présents dans la chaine carbonée de façon à ce que le taux molaire total représenté par les monomères O, R et A' soit égal à 100%. Les monomères non oléfiniques utiles à la préparation des élastomères oléfiniques époxydés peuvent être choisis parmi les monomères non oléfiniques ne conduisant pas à des insaturations et les monomères qui, une fois polymérisés, conduisent à des insaturations portées par la chaine élastomère (autres que des monomères diéniques).

Les monomères non oléfiniques ne conduisant pas à des insaturations sont essentiellement des monomères vinyliques et acryliques/méthacryliques. Par exemple, de tels monomères peuvent être choisis parmi le styrène, le vinyle acétate, l'alcool vinylique, l'acrylonitrile, l'acrylate de méthyle, le méthacrylate de méthyle, ces monomères étant éventuellement substitués par des groupes alkyles, aryles ou d'autres groupes fonctionnalisés.

Par exemple également, les monomères non diéniques utiles à la préparation des élastomères de type oléfiniques porteurs d'insaturations par copolymérisation sont tous ceux connus de l'homme de l'art pour former des élastomères insaturés, tels que par exemple le méthacrylate de dicyclopentadiényloxyéthyle.

Une caractéristique essentielle de l'élastomère oléfinique époxydé utile aux besoins de l'invention, est qu'il est fonctionnalisé, porteur de groupes fonctionnels époxydes.

Des élastomères oléfiniques époxydés et leurs procédés d'obtention sont bien connus de l'homme du métier. Des élastomères oléfiniques porteurs de groupes époxydes ont été décrits par exemple dans les documents EP 0247580 ou US 5576080. La société Arkema propose dans le commerce, des polyéthylènes époxydés sous les dénominations commerciales « Lotader AX8840» et « Lotader AX8900 ».

La fonction époxyde peut être portée directement par le squelette carboné, et est alors principalement obtenue par époxydation de doubles liaisons carbone-carbone initialement présentes après copolymérisation. Cette époxydation de polymères insaturés est bien connue de l'homme du métier, et peut se faire par exemple par des procédés à base de chlorohydrine ou de bromohydrine, des procédés d'oxydation directe ou des procédés à base de peroxydes d'hydrogène, d'alkyl hydropéroxydes ou de peracides (tels que l'acide peracétique ou acide performique).

La fonction époxyde peut également être pendante et est alors soit déjà présente dans un monomère intervenant dans la copolymérisation avec l'oléfine (ce monomère peut être, par exemple, le méthacrylate de glycidyle, l'allylglycidyléther ou le vinylglycidyléther), soit obtenue par la modification post-copolymérisation d'une fonction pendante.

Les élastomères oléfiniques époxydés présentent une Tg dans la très grande majorité des cas qui est négative (c'est-à-dire inférieure à 0°C).

Les élastomères oléfiniques époxydés présentent une masse molaire moyenne en nombre (Mn) d'au moins 10 000 g/mol, préférentiellement d'au moins 15 000 g/mol et d'au plus 1 500 000 g/mol. L'indice de polydispersité Ip, égal à Mw/Mn (Mw étant la masse molaire moyenne en poids), est compris entre 1,05 et 11,00.

De préférence, et en résumé, l'élastomère oléfinique comprenant des fonctions époxydes est donc un copolymère possédant au moins 50% (en moles) d'unités monomériques oléfine, et avec un nombre d'unités monomériques différentes supérieur ou égal à 2, préférentiellement de 2 à 5, et plus préférentiellement de 2 ou 3. Ce copolymère pourra être obtenu par copolymérisation ou par modification post-polymérisation d'un élastomère. Les fonctions époxydes présentes dans le copolymère oléfinique, obtenu par copolymérisation ou par modification post-polymérisation, seront soit portées directement par le squelette de la chaine, soit portées par un groupe latéral selon le mode d'obtention, par exemple par époxydation ou toute autre modification des fonctions diéniques présentes dans la chaine élastomérique après copolymérisation.

### Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge organique, particulièrement de noir de carbone, et optionnellement de la silice; la silice, lorsqu'elle est présente, est utilisée de préférence à un taux inférieur à 20 pce, plus préférentiellement inférieur à 10 pce (par exemple entre 0,1 et 10 pce). Ce mode de réalisation préférentiel est particulièrement préféré lorsque l'élastomère majoritaire de la composition est un caoutchouc isoprénique époxydé, plus particulièrement du caoutchouc naturel époxydé.

Alternativement, selon un autre mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce). Ce mode de réalisation préférentiel est également particulièrement préféré lorsque l'élastomère majoritaire de la composition est un caoutchouc isoprénique époxydé, plus particulièrement du caoutchouc naturel époxydé.

Pour coupler la charge inorganique renforçante à l'élastomère, on peut de manière optionnelle utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes, ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet US 2004/132880.

A titre d'agent de couplage autre qu'alkoxysilane polysulfuré, on citera notamment des POS (polyorganosiloxanes) bifonctionnels ou encore des polysulfures d'hydroxysilane tels que décrits dans les demandes de brevet WO 02/30939 et WO 02/31041, ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce. Dans un autre arrangement, les compositions de caoutchouc conformes à l'invention ne comprennent pas d'agent de couplage.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

### Système de réticulation

A l'élastomère époxydé et à la charge renforçante précédemment décrits est associé un système de réticulation, apte à réticuler ou durcir la composition de caoutchouc selon l'invention. Ce système de réticulation comprend un polyacide carboxylique de formule générale (I) et un imidazole de formule générale (II).

De manière connue de l'Homme du métier, un élastomère époxydé, quelle que soit la nature de l'élastomère, en particulier diénique, non diénique ou oléfinique, peut être réticulé par un système de réticulation comprenant un polyacide carboxylique et un imidazole, le polyacide formant des ponts à partir des fonctions époxydes, ces ponts comprenant des fonctions ester.

### - Polyacide

Le polyacide utile pour les besoins de l'invention est un polyacide carboxylique de formule générale (I) 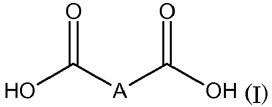 dans laquelle A représente une liaison covalente ou un groupement hydrocarboné comportant au moins 1 atome de carbone, éventuellement substitué et éventuellement interrompu par un ou plusieurs hétéroatomes.

De préférence dans le polyacide de formule générale (I), A représente une liaison covalente ou un groupement divalent hydrocarboné comportant de 1 à 1800 atomes de carbone, préférentiellement de 2 à 300 atomes de carbone, plus préférentiellement de 2 à 100 atomes de carbone, et de manière très préférentielle de 2 à 50 atomes de carbone. Au-dessus de 1800 atomes de carbone, le polyacide est un agent de réticulation moins performant. Ainsi, A représente de préférence un groupement divalent hydrocarboné comportant de 3 à 50 atomes de carbone, préférentiellement de 5 à 50 atomes de carbone, plus préférentiellement de 8 à 50 atomes de carbone, et encore plus préférentiellement de 10 à 40 atomes de carbone. Dans un arrangement particulier, la composition de caoutchouc selon l'invention comprend entre 0,9 et 30 pce d'au moins un polyacide dont le groupement A comporte entre 10 et 40 atomes de carbone et entre 5 et 30 pce d'au moins un polyacide dont le groupement A comporte entre 100 et 300 atomes de carbone.

Préférentiellement dans le polyacide de formule générale (I), A peut être un groupement divalent de type aliphatique, ou aromatique ou un groupement comportant au moins une partie aliphatique et une partie aromatique. De préférence, A peut être un groupement divalent de type aliphatique, ou un groupement comportant au moins une partie aliphatique et une partie aromatique. Alternativement, et de préférence également, A peut être un groupement divalent de type aliphatique saturé ou insaturé, par exemple un groupement alkylène.

Le groupement A du polyacide de formule générale (I) peut être interrompu par au moins un hétéroatome choisi parmi l'oxygène, l'azote et le soufre, de préférence l'oxygène.

Egalement, le groupement A du polyacide de formule générale (I) peut être substitué par au moins un radical choisi parmi les radicaux alkyle, cycloalkylalkyle, aryle, aralkyle, hydroxyle, alkoxy, amino et carbonyle.

Le polyacide de formule générale (I) peut comporter plus de deux fonctions acides carboxyliques, dans ce cas, le groupement A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques.

Selon un mode préférentiel, le radical A ne comporte pas d'autre fonction acide carboxylique, le polyacide est donc un diacide.

Le taux de polyacide est préférentiellement compris dans un domaine allant de 0,2 à 100 pce, de préférence de 0,2 à 50 pce, plus préférentiellement de 0,4 à 30 pce, et plus préférentiellement encore de 0,9 à 25 pce. En dessous de 0,2 pce de polyacide, l'effet de la réticulation n'est pas sensible tandis qu'au-delà de 100 pce de polyacide, le polyacide, agent de réticulation, devient majoritaire en poids par rapport à la matrice élastomérique.

Les polyacides utiles pour les besoin de l'invention sont soit disponibles dans le commerce, soit facilement préparés par l'homme de l'art selon des techniques bien connues telles que les voies chimiques décrites par exemple dans le document US 7534917 ainsi que dans les références que ce document cite, ou les voies biologiques, telles que la fermentation décrite dans le document US 3843466.

Par exemple, à titre de polyacides disponibles dans le commerce et utiles aux besoins de l'invention, on peut citer : l'acide oxalique, l'acide succinique, l'acide adipique, l'acide sébacique, l'acide dodécanedioïque, l'acide terephthalique ou encore des polyacides tels que l'acide trimésique ou l'acide 3,4-bis(carboxyméthyl)cyclopentanecarboxylique.

### - Imidazole

L'imidazole utile au système de réticulation selon l'invention est un imidazole de formule générale (II) 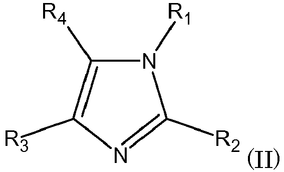 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble avec les atomes de carbone du cycle imidazole auxquels ils se rattachent, un cycle.

De préférence, l'imidazole de formule générale (II) possède des groupements tels que :
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

Préférentiellement, R₁ représente un groupement choisi parmi les groupements alkyles ayant de 2 à 12 atomes de carbone, ou aralkyles ayant de 7 à 13 atomes de carbone; groupements qui peuvent éventuellement être substitués. Plus préférentiellement, Ri représente un groupement aralkyle ayant de 7 à 13 atomes de carbone éventuellement substitué et R₂ représente un groupement alkyle ayant de 1 à 12 atomes de carbone. Encore plus préférentiellement, R₁ représente un groupement aralkyle ayant de 7 à 9 atomes de carbone éventuellement substitué et R₂ représente un groupement alkyle ayant de 1 à 4 atomes de carbone.

De préférence, R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Alternativement et préférentiellement également, R₃ et R₄ représentent forment avec les atomes de carbone du cycle imidazole auxquels ils se rattachent, un cycle phényle, cyclohexene, ou cyclopentene.

Pour un bon fonctionnement de l'invention, le taux d'imidazole est préférentiellement compris dans un domaine allant de 0,01 à 4 équivalents molaires, et de préférence de 0,01 à 3 équivalents molaires, par rapport aux fonctions acides carboxyliques présentes sur le polyacide carboxylique de formule générale (I). En dessous de 0,01 équivalents molaires, on n'observe pas d'effet du coagent imidazole par rapport à la situation où le polyacide est utilisé seul tandis qu'au-dessus d'une valeur de 4 équivalents molaires, on n'observe pas de bénéfice supplémentaire par rapport à des taux plus faibles. Ainsi, le taux d'imidazole est plus préférentiellement compris dans un domaine allant de 0,01 à 2,5 équivalents molaires, et de préférence de 0,01 à 2 équivalents molaires, et de manière encore plus préférentielle de 0,01 à 1,5 équivalents molaires et de manière préférée de 0,5 à 1,5 équivalents molaires par rapport aux fonctions acides carboxyliques présentes sur le polyacide carboxylique de formule générale (I).

Les imidazoles utiles pour les besoin de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

À l'évidence, et conformément à la définition de l'expression « à base de » pour la présente invention, une composition à base du polyacide de formule générale (I) et de l'imidazole de formule générale (II) présentés ci-dessus pourrait être une composition dans laquelle ledit polyacide et ledit imidazole auraient préalablement réagi ensemble pour former un sel entre une ou plusieurs fonctions acides du polyacide et respectivement un ou plusieurs noyaux imidazoles.

### Composé phénolique

La composition selon l'invention comprend au moins un composé phénolique, ce composé étant un composé aromatique de formule générale (III) 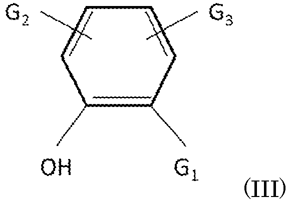 dans laquelle :
- G₁ représente un groupe hydroxyle, carboxyle, hydrogénocarbonyle, amino ou un radical aminoalkyle ;
- G₂ et G₃ représentent indépendamment l'un de l'autre un atome d'hydrogène, ou un groupe choisi parmi les groupes carboxyle, hydrogénocarbonyle et hydroxyle, ou un radical choisi parmi les radicaux alkyle, cycloalkylalkyle, aryle, aralkyle, aryloxy, alcoxyle, carboxylalkyle, carbonylalkyle, alkylcarbonyle, arylcarbonyle et aminoalkyle ;
le noyau aromatique dudit composé phénolique de formule générale (III) étant substitué par au moins un groupe carboxyle, un groupe hydrogénocarbonyle, un groupe amino ou un radical aminoalkyle, avantageusement par au moins un groupe carboxyle, un groupe hydrogénocarbonyle ou un radical aminoalkyle, très avantageusement par un groupe carboxyle ou un groupe hydrogénocarbonyle.

Dans la présente description, l'expression « composé phénolique » désigne le composé aromatique de formule générale (III).

Par « le noyau aromatique dudit composé phénolique de formule générale (III) étant substitué par au moins un groupe carboxyle, un groupe hydrogénocarbonyle, ou un radical aminoalkyle », on entend que ledit substituant est directement rattaché à l'un des atomes de carbone du noyau aromatique représenté dans la formule générale (III).

Par groupe carboxyle, ou fonction acide carboxylique, on entend un groupe de formule - COOH dans lequel l'atome de carbone est lié par une double liaison à un atome d'oxygène et par une liaison simple à un groupe hydroxyle -OH.

Par groupe hydrogénocarbonyle, on entend un groupe de formule -CHO dans lequel l'atome de carbone est lié par une double liaison à un atome d'oxygène et par une liaison simple à un atome d'hydrogène.

Par groupe amino, on entend un groupe de formule -NH₂.

Par radical aminoalkyle, on entend un radical de formule -CₙH₂ₙ-NH₂, dans lequel n est un entier, avantageusement compris entre 1 et 15, préférentiellement entre 1 et 10, très préférentiellement entre 1 et 5, et de manière préférée entre 1 et 3.

De manière avantageuse, G₂ et G₃ représentent indépendamment l'un de l'autre un atome d'hydrogène, ou un groupe choisi parmi les groupes carboxyle, hydrogénocarbonyle et hydroxyle, ou un radical alkyle.

Préférentiellement, G₂ et G₃, indépendamment l'un de l'autre, sont un atome d'hydrogène, ou comprennent de 1 à 10 atomes de carbone, préférentiellement de 1 à 6 atomes de carbone, de manière avantageuse de 1 à 5 atomes de carbone et de manière préférée de 1 à 3 atomes de carbone.

Dans un arrangement préféré, G₁ est un groupe hydroxyle et G₂ est un groupe hydroxyle ou l'atome d'hydrogène.

Dans un autre arrangement préféré, G₁ est un groupe carboxyle et G₂ est l'atome d'hydrogène. Dans une variante de cet arrangement, G₃ est l'atome d'hydrogène. Dans une autre variante de cet arrangement, G₃ est un groupe hydroxyle.

Quel que soit le mode de réalisation préféré, la masse molaire du composé aromatique de formule générale (III) est avantageusement inférieure à 1000 g/mol, de manière préférée inférieure à 800 g/mol, préférentiellement inférieure à 600 g/mol, de manière très préférée inférieure à 400 g/mol, très préférentiellement inférieure à 220 g/mol, de manière très préférentielle inférieure à 200 g/mol, voire à 180 g/mol.

De manière très préférée, le composé phénolique de formule générale (III) est choisi dans le groupe constitué par l'acide gallique, l'acide protocatéchique, l'acide salicylique, l'aldéhyde protocatéchique et l'acide para-hydroxybenzoique.

La composition de caoutchouc selon l'invention présente des caractéristiques d'adhésion à un composant métallique particulièrement intéressantes, notamment grâce à la présence du composé phénolique de formule générale (III), en particulier pour la constitution de composites, et tout particulièrement de composites à destination de pneumatiques.

La composition de caoutchouc selon l'invention comprend avantageusement de 0,1 à 25 pce de composé phénolique, préférentiellement de 2 à 15 pce. En deçà de 0,1 pce, le composé phénolique n'a pas d'effet notable sur les propriétés d'adhésion de la composition de caoutchouc selon l'invention. Au-delà de 25 pce, on n'observe plus de gain significatif.

### Additifs divers

Les compositions de caoutchouc conformes à l'invention peuvent comporter également tout ou partie des additifs usuels, connus de l'homme de l'art et habituellement utilisés dans les compositions de caoutchouc pour pneumatiques, en particulier de couches internes telles que définies ultérieurement dans la présente demande, comme par exemple des plastifiants (huiles plastifiantes et/ou résines plastifiantes), des charges renforçantes ou non renforçantes autres que celles précitées, des pigments, des agents de protection tels que cires anti-ozone, anti-ozonants chimiques, anti-oxydants, des agents anti-fatigue, des résines renforçantes (telles que décrites par exemple dans la demande WO 02/10269).

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (par exemple l'octyltriéthoxysilane, ou silane octéo), des polyols, des polyéthers, des amines primaires, secondaires ou tertiaires, des polyorganosiloxanes hydroxylés ou hydrolysables.

De manière préférentielle, les compositions de caoutchouc de l'invention sont dépourvues de système de réticulation autre que celui décrit précédemment, et qui comporte au moins un polyacide et au moins un imidazole. Dit autrement, le système de réticulation à base d'au moins un polyacide et au moins un imidazole est préférentiellement le seul système de réticulation dans la composition de caoutchouc de l'invention. De préférence, les compositions de caoutchouc de l'invention sont dépourvues de système de vulcanisation, ou en contiennent moins de 1 pce, de préférence moins de 0,5 pce et plus préférentiellement moins de 0,2 pce. Ainsi, la composition de caoutchouc selon l'invention, est préférentiellement dépourvue de soufre moléculaire ou en contient moins de 1 pce, de préférence moins de 0,5 pce et plus préférentiellement moins de 0,2 pce. De même la composition est préférentiellement dépourvue de tout accélérateur ou activateur de vulcanisation, tels qu'ils sont connus de l'homme du métier, ou en contient moins de 1 pce, de préférence moins de 0,5 pce et plus préférentiellement moins de 0,2 pce.

De même la composition est préférentiellement dépourvue de sels de cobalt, tels qu'ils sont connus de l'homme du métier, et dont l'effet connu de l'Homme du métier est une amélioration de l'adhésion, ou en contient moins de 1 pce, de préférence moins de 0,5 pce, plus préférentiellement moins de 0,2 pce et très préférentiellement moins de 0,1 pce.

Ainsi, de manière surprenante, une très bonne adhésion de la composition selon l'invention sur des câbles de renforcement est obtenue sans qu'il soit besoin d'utiliser de sels de cobalt.

### Préparation des compositions de caoutchouc

La composition de caoutchouc conforme à l'invention est fabriquée dans des mélangeurs appropriés, en utilisant des phases de préparation bien connues de l'homme du métier :
- une phase de travail ou malaxage thermomécanique, qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, le système de réticulation comprenant le polyacide carboxylique et l'imidazole, le composé phénolique, les charges, les éventuels autres additifs divers. L'incorporation de la charge à l'élastomère peut être réalisée en une ou plusieurs fois en malaxant thermomécaniquement. Dans le cas où la charge, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges présents dans la composition qui ne sont pas sous la forme de masterbatch, ainsi que les éventuels autres additifs divers.

Le malaxage thermomécanique est réalisé à haute température, jusqu'à une température maximale comprise entre 110°C et 200°C, de préférence entre 130°C et 185°C, pendant une durée généralement comprise entre 2 et 10 minutes.
- une seconde phase de travail mécanique peut être ensuite réalisée dans un mélangeur externe tel qu'un mélangeur à cylindres, après refroidissement du mélange obtenu au cours de la première phase jusqu'à une plus basse température, typiquement inférieure à 120°C, par exemple entre 40°C et 100°C.

La composition finale ainsi obtenue est ensuite calandrée, par exemple sous la forme d'une feuille ou d'une plaque, notamment pour une caractérisation au laboratoire, ou encore extrudée sous la forme d'un semi-fini (ou profilé) de caoutchouc.

La composition peut être soit à l'état cru (avant réticulation ou vulcanisation), soit à l'état cuit (après réticulation ou vulcanisation), peut être un produit semi-fini qui peut être utilisé dans un pneumatique.

La cuisson peut être conduite, de manière connue de l'homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

### Composite

L'invention concerne également un composite à base au moins d'un composant et d'une composition de caoutchouc selon l'invention.

Par l'expression composite "à base au moins d'un composant et d'une composition selon l'invention", il faut entendre un composite comprenant le composant et ladite composition, la composition ayant pu réagir avec la surface du composant lors des différentes phases de fabrication du composite, en particulier au cours de la réticulation de la composition ou au cours de la confection du composite avant réticulation de la composition.

Ledit composant peut être tout ou partie métallique ou textile. En particulier, ledit composant peut être de nature textile, c'est-à-dire réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Dans un arrangement particulier, ledit composant comprend une surface métallique.

La surface métallique du composant constitue au moins une partie, et avantageusement la totalité de la surface dudit composant et est destinée à entrer au contact de la composition selon l'invention.

La composition selon l'invention enrobe au moins une partie du composant, avantageusement la totalité dudit composant.

Le composant est avantageusement en partie ou en intégralité métallique, la partie métallique comprenant au moins la surface métallique. De préférence la totalité du composant est en métal.

Selon une première variante de l'invention, la surface métallique du composant est faite d'un matériau différent du restant du composant. Autrement dit, le composant est fait d'un matériau qui est au moins en partie, avantageusement totalement, recouvert par une couche métallique qui constitue la surface métallique. Le matériau au moins en partie, avantageusement totalement, recouvert par la surface métallique est de nature métallique ou non métallique, de préférence métallique.

Selon une deuxième variante de l'invention, le composant est fait d'un même matériau, auquel cas le composant est fait d'un métal qui est identique au métal de la surface métallique.

Selon un mode de réalisation de l'invention, la surface métallique comprend un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn), le zinc ou le bronze (alliage Cu-Sn), de manière encore plus préférée le laiton ou le zinc, et de manière très préférée le laiton.

Dans la présente demande, l'expression « le métal de la surface métallique est le métal ci-après désigné » revient à dire que la surface métallique est en métal ci-après désigné. Par exemple l'expression « le métal de la surface métallique est le laiton » écrite plus haut signifie que la surface métallique est en laiton. Certains métaux étant sujets à l'oxydation au contact de l'air ambiant, le métal peut être en partie oxydé, à l'exception de l'acier inoxydable.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Le composant peut être sous toute forme. De préférence le composant se présente sous la forme d'un fil ou d'un câble.

Selon un mode de réalisation particulier de l'invention, le composant présente une longueur qui est au moins égale au millimètre. On entend par longueur la plus grande dimension du composant. A titre de composant ayant une longueur qui est au moins égale au millimètre, on peut citer les éléments de renforcement par exemple utilisés dans le pneumatique pour véhicule, comme les éléments filaires (monofilament ou câble) et les éléments non filaires.

Selon un mode de réalisation particulièrement préférentiel de l'invention, le composite est une structure renforcée dans laquelle le composant constitue un élément de renforcement et dans laquelle la composition selon l'invention enrobe l'élément de renforcement.

Selon un mode de réalisation particulièrement préférentiel, le composite est un produit renforcé qui comprend des éléments de renforcement et une gomme de calandrage dans laquelle sont noyés les éléments de renforcement, chaque élément de renforcement consistant en un composant défini précédemment selon l'un quelconque des modes de réalisation de l'invention et la gomme de calandrage comprenant la composition de caoutchouc selon l'invention. Selon ce mode de réalisation, les éléments de renforcement sont agencés généralement côte à côte selon une direction principale. Pour une application envisagée dans le pneumatique, le composite peut donc constituer une armature de renforcement pour pneumatique.

Le composite conforme à l'invention peut être à l'état cru (avant réticulation de la composition de caoutchouc) ou à l'état cuit (après réticulation de la composition de caoutchouc). Le composite est cuit après mise en contact du composant avec la composition de caoutchouc selon l'invention.

Le composite peut être fabriqué par un procédé qui comprend les étapes suivantes :
- Réaliser deux couches de la composition selon l'invention,
- Prendre le composant en sandwich dans les deux couches en le déposant entre les deux couches,
- Le cas échéant cuire le composite.

Alternativement, le composite peut être fabriqué en déposant le composant sur une portion d'une couche, la couche est alors repliée sur elle-même pour couvrir le composant qui est ainsi pris en sandwich sur toute sa longueur ou une partie de sa longueur.

La réalisation des couches peut se faire par calandrage. Au cours de la cuisson du composite, la composition de caoutchouc est réticulée.

Lorsque le composite est destiné à être utilisé en tant qu'armature de renforcement dans un pneumatique, la cuisson du composite a lieu généralement lors de la cuisson de l'enveloppe du pneumatique.

### Pneumatique

Le pneumatique, autre objet de l'invention, a pour caractéristique essentielle de comprendre la composition ou le composite conforme à l'invention. Le pneumatique peut être à l'état cru (avant réticulation de la composition de caoutchouc) ou à l'état cuit (après réticulation de la composition de caoutchouc). Généralement, au cours de la fabrication du pneumatique, la composition ou le composite est déposé à l'état cru (c'est-à-dire avant réticulation de la composition de caoutchouc) dans la structure du pneumatique avant l'étape de cuisson du pneumatique.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des souscouches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes des pneumatiques.

Aussi, l'invention concerne également un pneumatique comprenant une couche interne comportant une composition ou un composite selon la présente invention. Selon l'invention, la couche interne peut être choisie dans le groupe constitué par les nappes carcasse, les nappes sommet, les bourrages-tringle, les pieds sommets, les couches de découplage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

Ainsi, sans que cela soit limitatif, l'invention a pour objet au moins l'une des réalisations suivantes :
1. Une composition de caoutchouc à base d'au moins un élastomère comprenant des fonctions époxyde, au moins une charge renforçante, un système de réticulation comprenant un polyacide carboxylique de formule générale (I) 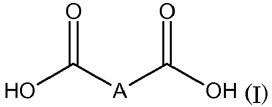 dans laquelle A représente une liaison covalente ou un groupement hydrocarboné comportant au moins 1 atome de carbone, éventuellement substitué et éventuellement interrompu par un ou plusieurs hétéroatomes, un imidazole de formule générale (II) 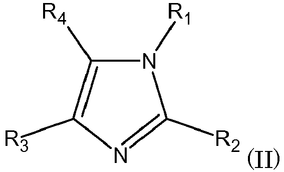 dans laquelle,
   - R₁ représente un groupement hydrocarboné ou un atome d'hydrogène,
   - R₂ représente un groupement hydrocarboné,
   - R₃ et R₄ représentent indépendamment l'un de l'autre, un atome d'hydrogène ou un groupement hydrocarboné, ou encore R₃ et R₄ forment ensemble, avec les atomes de carbone du cycle imidazole auxquels ils se rattachent, un cycle,
   et au moins un composé phénolique de formule générale (III) 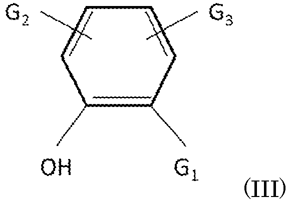 dans laquelle :
   - G₁ représente un groupe hydroxyle, carboxyle, hydrogénocarbonyle, amino ou un radical aminoalkyle ;
   - G₂ et G₃ représentent indépendamment l'un de l'autre un atome d'hydrogène, ou un groupe choisi parmi les groupes carboxyle, hydrogénocarbonyle et hydroxyle, ou un radical choisi parmi les radicaux alkyle, cycloalkylalkyle, aryle, aralkyle, aryloxy, alcoxyle, carboxylalkyle, carbonylalkyle, alkylcarbonyle, arylcarbonyle et aminoalkyle ;
   le noyau aromatique dudit composé phénolique de formule générale (III) étant substitué par au moins un groupe carboxyle, un groupe hydrogénocarbonyle, un groupe amino ou un radical aminoalkyle.
2. Une composition selon la réalisation précédente dans laquelle G₂ et G₃ représentent indépendamment l'un de l'autre un atome d'hydrogène, ou un groupe choisi parmi les groupes carboxyle, hydrogénocarbonyle et hydroxyle, ou un radical alkyle.
3. Une composition selon l'une des réalisations précédentes dans laquelle G₂ et G₃, indépendamment l'un de l'autre, soit sont un atome d'hydrogène, soit comprennent de 1 à 10 atomes de carbone.
4. Une composition selon l'une des réalisations précédentes dans laquelle G₁ est un groupe hydroxyle et G₂ est un groupe hydroxyle ou l'atome d'hydrogène.
5. Une composition selon la réalisation 1 dans laquelle G₁ est un groupe carboxyle et G₂ est l'atome d'hydrogène.
6. Une composition selon la réalisation 5 dans laquelle G₃ est l'atome d'hydrogène.
7. Une composition selon la réalisation 5 dans laquelle G₃ est un groupe hydroxyle.
8. Une composition selon l'une des réalisations 1 à 5 dans laquelle ledit radical aminoalkyle comprend de 1 à 15 atomes de carbone.
9. Une composition selon l'une des réalisations précédentes dans laquelle la masse molaire dudit composé phénolique est inférieure à 1000 g/mol.
10. Une composition selon l'une des réalisations précédentes dans laquelle le taux de composé phénolique est compris entre 0,1 et 25 pce.
11. Une composition selon l'une des réalisations précédentes dans laquelle ladite composition est dépourvue de soufre moléculaire ou en contient moins de 1 pce.
12. Une composition selon l'une des réalisations précédentes dans laquelle ladite composition est dépourvue de sels de cobalt ou en contient moins de 1 pce.
13. Une composition de caoutchouc selon l'une quelconque des réalisations 1 à 12 dans laquelle A représente une liaison covalente ou un groupement divalent hydrocarboné comportant de 1 à 1800 atomes de carbone, de préférence de 2 à 300 atomes de carbone.
14. Une composition de caoutchouc selon l'une quelconque des réalisations 1 à 13 dans laquelle A est un groupement divalent de type aliphatique, ou aromatique ou un groupement comportant au moins une partie aliphatique et une partie aromatique.
15. Une composition de caoutchouc selon l'une quelconque des réalisations 1 à 14 dans laquelle A est un groupement divalent de type aliphatique saturé ou insaturé.
16. Une composition de caoutchouc selon l'une quelconque des réalisations 1 à 15 dans laquelle A est un groupement alkylène.
17. Une composition de caoutchouc selon l'une quelconque des réalisations 1 à 16 dans laquelle A est interrompu par au moins un hétéroatome choisi parmi l'oxygène, l'azote et le soufre, de préférence l'oxygène.
18. Une composition de caoutchouc selon l'une quelconque des réalisations 1 à 17 dans laquelle A est substitué par au moins un radical choisi parmi les radicaux alkyle, cycloalkylalkyle, aryle, aralkyle, hydroxyle, alkoxy, amino et carbonyle.
19. Une composition selon l'une quelconque des réalisations 1 à 18, dans laquelle A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques.
20. Une composition selon l'une quelconque des réalisations 1 à 19, dans laquelle le radical A ne comporte pas d'autre fonction acide carboxylique.
21. Une composition de caoutchouc selon l'une quelconque des réalisations précédentes, dans laquelle le taux de poly-acide est compris dans un domaine allant de 0,2 à 100 pce, de préférence de 0,2 à 50 pce.
22. Une composition de caoutchouc selon l'une quelconque des réalisations précédente, dans laquelle,
   - R1 représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
   - R2 représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
   - R3 et R4 représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R3 et R4 forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.
23. Une composition de caoutchouc selon l'une quelconque des réalisations précédentes, dans laquelle R1 représente un groupement choisi parmi les groupements alkyles ayant de 2 à 12 atomes de carbone, ou aralkyles ayant de 7 à 13 atomes de carbone; groupements qui peuvent éventuellement être substitués.
24. Une composition de caoutchouc selon l'une quelconque des réalisations précédentes, dans laquelle R1 représente un groupement aralkyle ayant de 7 à 13 atomes de carbone éventuellement substitué et R2 représente un groupement alkyle ayant de 1 à 12 atomes de carbone.
25. Une composition de caoutchouc selon l'une quelconque des réalisations précédentes, dans laquelle R3 et R4 représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.
26. Une composition de caoutchouc selon l'une quelconque des réalisations précédentes dans laquelle la charge renforçante comporte du noir de carbone, de la silice ou un mélange de noir de carbone et de silice.
27. Une composition de caoutchouc selon l'une quelconque des réalisations précédentes dans laquelle le taux de charge renforçante est compris entre 20 et 200 pce.
28. Un composite à base au moins d'un composant et d'une composition selon l'une des réalisations 1 à 27.
29. Un composite selon la réalisation 28 présentant une surface métallique.
30. Un composite selon la réalisation 29 dans lequel la surface métallique du composant est faite d'un matériau différent du restant du composant.
31. Un composite selon l'une quelconque des réalisations 29 à 30 dans lequel la surface métallique dudit composant comprend un métal choisi dans le groupe constitué par le fer, le cuivre, le zinc, l'étain, l'aluminium, le cobalt, le nickel et les alliages comportant au moins un de ces métaux.
32. Un composite selon l'une quelconque des réalisations 29 à 31 dans lequel le métal de la surface métallique est le fer, le cuivre, l'étain, le zinc ou un alliage comportant au moins un de ces métaux.
33. Un composite selon l'une quelconque des réalisations 29 à 32 dans lequel le métal de la surface métallique est le laiton ou le zinc.
34. Un composite selon l'une quelconque des réalisations 28 à 33 dans lequel le composant présente une longueur au moins égale au millimètre.
35. Un composite selon l'une quelconque des réalisations 28 à 34 dans lequel le composant est un fil ou un câble.
36. Un pneumatique comprenant une composition selon l'une des réalisations 1 à 27 ou un composite selon l'une des réalisations 28 à 35.
37. Un pneumatique comprenant une couche interne comportant une composition selon l'une des réalisations 1 à 27 ou un composite selon l'une des réalisations 28 à 35.

### Exemples

La qualité de la liaison entre la composition de caoutchouc et le composant est déterminée par un test dans lequel on mesure la force nécessaire pour extraire des tronçons de fils unitaires présentant une surface métallique, de la composition de caoutchouc réticulée. À cette fin, on prépare des composites sous la forme d'éprouvette contenant d'une part des fils unitaires métalliques à titre de composant présentant une surface métallique et d'autre part un mélange élastomère comprenant la composition de caoutchouc réticulée.

### Préparation des compositions de caoutchouc

On procède pour préparer les différentes compositions de caoutchouc, de la manière suivante : on introduit dans un mélangeur interne (taux de remplissage final : environ 70% en volume), dont la température initiale de cuve est d'environ 60°C, successivement le polymère comprenant des fonctions époxyde, puis tous les autres constituants du mélange. On conduit alors un travail thermomécanique en une étape jusqu'à atteindre une température maximale de « tombée » de 150°C. On récupère le mélange ainsi obtenu, on le refroidit sur un mélangeur externe (homo-finisseur) à 30°C, en mélangeant le tout.

**Tableau 1**

| | ***T1*** | ***T2*** | ***C1*** | ***C2*** | ***C3*** | **C*4*** | ***T3*** |
|---|---|---|---|---|---|---|---|
| *eNR25 (1)* | 100 | 100 | 100 | 100 | 100 | 100 | 100 |
| *Silice 160 MP (2)* | 60 | 60 | 60 | 60 | 60 | 60 | 60 |
| *Silane Octéo (3)* | 4,8 | 4,8 | 4,8 | 4,8 | 4,8 | 4,8 | 4,8 |
| *6PPD (4)* | 1,5 | 1,5 | 1,5 | 1,5 | 1,5 | 1,5 | 1,5 |
| *Diacide PBACN (5)* | 24,8 | 24,8 | 24,8 | 24,8 | 24,8 | 24,8 | 24,8 |
| *Imidazole BMI (6)* | 2,2 | 2,2 | 2,2 | 2,2 | 2,2 | 2,2 | 2,2 |
| *Acide 3,4-dihydroxyhydrocinna mique (7)* | 0 | 5,4 | 0 | 0 | 0 | 0 | 0 |
| *Acide gallique (7)* | 0 | 0 | 5 | 0 | 0 | 0 | 0 |
| *Acide protocatéchique (7)* | 0 | 0 | 0 | 4,5 | 0 | 0 | 0 |
| *Acide salicylique (7)* | 0 | 0 | 0 | 0 | 4 | 0 | 0 |
| *Aldéhyde protocatéchique (7)* | 0 | 0 | 0 | 0 | 0 | 4 | 0 |
| *Acide para-hydroxybenzoique (7)* | 0 | 0 | 0 | 0 | 0 | 0 | 4 |

| | | | | | | | |
|---|---|---|---|---|---|---|---|
| Toutes les compositions sont données en pce (1) Caoutchouc Naturel Epoxydé, « ENR-25 », de la société Guthrie Polymer ; (2) Silice 160 MP, « Zeosil 1165MP » de la société Rhodia ; (3) « Dynasylan Octeo », de la société Degussa ; (4) N-1,3-diméthylbutyl-N-phénylparaphénylènediamine (Santoflex 6-PPD de la société Flexsys) ; (5) Poly(acrylonitrile-co-butadiene), dicarboxy terminated, Sigma-Aldrich ref.418870, Mn=3800 g/mol ; (6) 1-benzyl-2-méthylimidazole, CAS = 13750-62-4 de la société Sigma-Aldrich ; (7) Sigma-Aldrich | | | | | | | |

On note que la composition « T1 » ne comporte aucun composé phénolique spécifique.

### Préparation des éprouvettes

Les compositions de caoutchouc ainsi préparées sont utilisées pour confectionner un composite sous la forme d'une éprouvette selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les fils unitaires sont emprisonnés entre les deux plaques à l'état cru, à égale distance et en laissant dépasser de part et d'autre de ces plaques une extrémité du fil unitaire de longueur suffisante pour la traction ultérieure. Le bloc comportant les fils unitaires est alors placé dans un moule adapté aux conditions de tests visées et laissées à l'initiative de l'homme de l'art ; à titre d'exemple, dans le cas présent, la cuisson du bloc est réalisée à 170°C pendant un temps variant de 25 min à 90 min selon la composition sous pression de 5.5 tonnes.

Les fils unitaires sont des fils en acier clair (c'est-à-dire non revêtu) ou en acier recouvert de laiton, de zinc ou de bronze. Leur diamètre est de 1,30 mm ; l'épaisseur du revêtement en laiton de 200 nm à 1 µm, l'épaisseur du revêtement en zinc ou en bronze de 50 nm à 0,1 µm.

Les éprouvettes ainsi préparées avec des compositions conformes correspondent à des composites conformes à l'invention.

### Test d'adhésion

A l'issue de la cuisson, l'éprouvette ainsi constituée du bloc réticulé et des fils unitaires est mise en place dans les mâchoires d'une machine de traction adaptée pour permettre de tester chaque tronçon isolément, à une vitesse et une température données (par exemple, dans le cas présent, à 100 mm/min et température ambiante).

On caractérise les niveaux d'adhésion en mesurant la force dite d'arrachement pour arracher les tronçons de l'éprouvette.

Les résultats sont exprimés en base 100 par rapport à une éprouvette témoin qui contient des fils unitaires de nature identique à l'éprouvette testée et qui contient la composition de caoutchouc « T1 » présentée dans le Tableau 1.

Une valeur supérieure à celle de l'éprouvette témoin, arbitrairement fixée à 100, indique un résultat amélioré, c'est-à-dire une force d'arrachement supérieure à celle de l'éprouvette témoin dont la valeur est arbitrairement fixée à 100.

**Tableau 2**

| Eprouvette | ***T1*** | ***T2*** | ***C1*** | ***C2*** | ***C3*** | ***C4*** | ***T3*** |
|---|---|---|---|---|---|---|---|
| Laiton | 100 | 63 | 675 | 375 | 350 | 488 | 34 |
| Zinc | 100 | 84 | 832 | 447 | 263 | 274 | 63 |
| Acier | 100 | - | 302 | - | - | 169 | - |
| Bronze | 100 | - | 315 | - | - | 139 | - |

| | | | | | | | |
|---|---|---|---|---|---|---|---|
| - : Non mesuré | | | | | | | |

### Exemple 1

*Cet exemple montre l'amélioration d'adhésion apportée par des compositions selon l'invention par rapport à des compositions témoin.*

Le tableau 2 montre les résultats des tests d'adhésion effectués sur des éprouvettes témoins et sur des éprouvettes conformes à l'invention.

Présentant des valeurs très supérieures à 100 dans le test d'adhésion, les composites conformes à l'invention présentent une résistance à l'arrachement fortement améliorée, aussi bien dans le cas des éléments filaires en laiton qu'en zinc, acier ou bronze.

L'amélioration de la performance du composite est observée en l'absence de toute étape de sulfuration.

## Revendications

1. Composition de caoutchouc à base d'au moins un élastomère comprenant des fonctions époxyde, au moins une charge renforçante, un système de réticulation comprenant un polyacide carboxylique de formule générale (I) 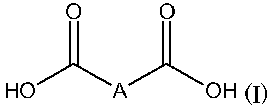 dans laquelle A représente une liaison covalente ou un groupement hydrocarboné comportant au moins 1 atome de carbone, éventuellement substitué et éventuellement interrompu par un ou plusieurs hétéroatomes, un imidazole de formule générale (II) 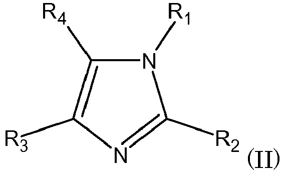 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné, ou encore R₃ et R₄ forment ensemble, avec les atomes de carbone du cycle imidazole auxquels ils se rattachent, un cycle,
et au moins un composé phénolique de formule générale (III) 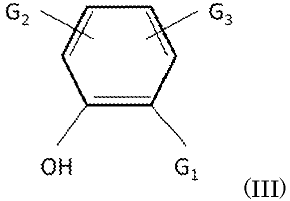 dans laquelle :
- G₁ représente un groupe hydroxyle, carboxyle, hydrogénocarbonyle, amino ou un radical aminoalkyle ;
- G₂ et G₃ représentent indépendamment l'un de l'autre un atome d'hydrogène, ou un groupe choisi parmi les groupes carboxyle, hydrogénocarbonyle et hydroxyle, ou un radical choisi parmi les radicaux alkyle, cycloalkylalkyle, aryle, aralkyle, aryloxy, alcoxyle, carboxylalkyle, carbonylalkyle, alkylcarbonyle, arylcarbonyle et aminoalkyle ;
le noyau aromatique dudit composé phénolique de formule générale (III) étant substitué par au moins un groupe carboxyle, un groupe hydrogénocarbonyle, un groupe amino ou un radical aminoalkyle.

2. Composition selon la revendication précédente dans laquelle G₂ et G₃ représentent indépendamment l'un de l'autre un atome d'hydrogène, ou un groupe choisi parmi les groupes carboxyle, hydrogénocarbonyle et hydroxyle, ou un radical alkyle.

3. Composition selon l'une des revendications précédentes dans laquelle G₂ et G₃, indépendamment l'un de l'autre, soit sont un atome d'hydrogène, soit comprennent de 1 à 10 atomes de carbone.

4. Composition selon l'une des revendications précédentes dans laquelle G₁ est un groupe hydroxyle et G₂ est un groupe hydroxyle ou l'atome d'hydrogène.

5. Composition selon la revendication 1 dans laquelle G₁ est un groupe carboxyle et G₂ est l'atome d'hydrogène.

6. Composition selon la revendication 5 dans laquelle G₃ est l'atome d'hydrogène.

7. Composition selon la revendication 5 dans laquelle G₃ est un groupe hydroxyle.

8. Composition selon l'une des revendications 1 à 5 dans laquelle ledit radical aminoalkyle comprend de 1 à 15 atomes de carbone.

9. Composition selon l'une des revendications précédentes dans laquelle la masse molaire dudit composé phénolique est inférieure à 1000 g/mol.

10. Composition selon l'une des revendications précédentes dans laquelle le taux de composé phénolique est compris entre 0,1 et 25 pce.

11. Composition de caoutchouc selon l'une quelconque des revendications précédentes, dans laquelle le taux de poly-acide est compris dans un domaine allant de 0,2 à 100 pce, de préférence de 0,2 à 50 pce.

12. Composition de caoutchouc selon l'une quelconque des revendications précédentes dans laquelle la charge renforçante comporte du noir de carbone, de la silice ou un mélange de noir de carbone et de silice.

13. Composition de caoutchouc selon l'une quelconque des revendications précédentes dans laquelle le taux de charge renforçante est compris entre 20 et 200 pce.

14. Composite à base au moins d'un composant et d'une composition selon l'une des revendications 1 à 13.

15. Pneumatique comprenant une composition selon l'une des revendications 1 à 13 ou un composite selon la revendication 14.

## Patentansprüche

1. Kautschukzusammensetzung auf Basis von mindestens einem Elastomer mit Epoxidfunktionen, mindestens einem verstärkenden Füllstoff, einem Vernetzungssystem, umfassend eine Polycarbonsäure der allgemeinen Formel (I) 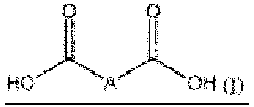 in der A für eine kovalente Bindung oder eine Kohlenwasserstoffgruppe mit mindestens 1 Kohlenstoffatom, die gegebenenfalls durch ein oder mehrere Heteroatome unterbrochen ist, ein Imidazol der allgemeinen Formel (II) 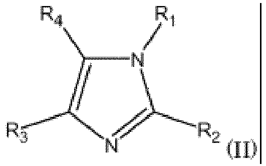 in der
- R₁ für eine Kohlenwasserstoffgruppe oder ein Wasserstoffatom steht,
- R₂ für eine Kohlenwasserstoffgruppe steht,
- R₃ und R₄ unabhängig voneinander für ein Wasserstoffatom oder eine Kohlenwasserstoffgruppe stehen oder R₃ und R₄ auch zusammen mit den Kohlenstoffatomen des Imidazolrings, an den sie gebunden sind, einen Ring bilden,
und mindestens eine Phenolverbindung der allgemeinen Formel (III) 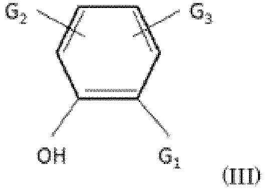 in der:
- G₁ für eine Hydroxyl-, Carboxyl-, Hydrogencarbonyl- oder Aminogruppe oder einen Aminoalkylrest steht;
- G₂ und G₃ unabhängig voneinander für ein Wasserstoffatom oder eine aus Carboxyl-, Hydrogencarbonyl- und Hydroxylgruppen ausgewählte Gruppe oder einen aus Alkyl-, Cycloalkylalkyl-, Aryl-, Aralkyl-, Aryloxy-, Alkoxy-, Carboxylalkyl-, Carbonylalkyl-, Alkylcarbonyl-, Arylcarbonyl- und Aminoalkylresten ausgewählten Rest stehen;
wobei der aromatische Kern der Phenolverbindung der allgemeinen Formel (III) durch mindestens eine Carboxylgruppe, eine Hydrogencarbonylgruppe, eine Aminogruppe oder einen Aminoalkylrest substituiert ist.

2. Zusammensetzung nach dem vorhergehenden Anspruch, wobei G₂ und G₃ unabhängig voneinander für ein Wasserstoffatom oder eine aus Carboxyl-, Hydrogencarbonyl- und Hydroxylgruppen ausgewählte Gruppe oder einen Alkylrest steht.

3. Zusammensetzung nach einem der vorhergehenden Ansprüche, wobei G₂ und G₃ unabhängig voneinander entweder ein Wasserstoffatom sind oder 1 bis 10 Kohlenstoffatome umfassen.

4. Zusammensetzung nach einem der vorhergehenden Ansprüche, wobei G₁ eine Hydroxylgruppe ist und G₂ eine Hydroxylgruppe oder ein Wasserstoffatom ist.

5. Zusammensetzung nach Anspruch 1, wobei G₁ eine Carboxylgruppe ist und G₂ ein Wasserstoffatom ist.

6. Zusammensetzung nach Anspruch 5, wobei G₃ ein Wasserstoffatom ist.

7. Zusammensetzung nach Anspruch 5, wobei G₃ eine Hydroxylgruppe ist.

8. Zusammensetzung nach einem der Ansprüche 1 bis 5, wobei der Aminoalkylrest 1 bis 15 Kohlenstoffatome umfasst.

9. Zusammensetzung nach einem der vorhergehenden Ansprüche, wobei die Molmasse der Phenolverbindung weniger als 1000 g/mol beträgt.

10. Zusammensetzung nach einem der vorhergehenden Ansprüche, wobei der Gehalt an Phenolverbindung zwischen 0,1 und 25 phe liegt.

11. Kautschukzusammensetzung nach einem der vorhergehenden Ansprüche, wobei der Gehalt an Polysäure in einem Bereich von 0,2 bis 100 phe, vorzugsweise von 0,2 bis 50 phe, liegt.

12. Kautschukzusammensetzung nach einem der vorhergehenden Ansprüche, wobei der verstärkende Füllstoff Ruß, Kieselsäure oder eine Mischung von Ruß und Kieselsäure umfasst.

13. Kautschukzusammensetzung nach einem der vorhergehenden Ansprüche, wobei der Gehalt an verstärkendem Füllstoff zwischen 20 und 200 phe liegt.

14. Verbund auf Basis von mindestens einer Komponente und einer Zusammensetzung nach einem der Ansprüche 1 bis 13.

15. Reifen, umfassend eine Zusammensetzung nach einem der Ansprüche 1 bis 13 oder einen Verbund nach Anspruch 14.

## Claims

1. Rubber composition based on at least one elastomer comprising epoxide functions, at least one reinforcing filler, a crosslinking system comprising a polycarboxylic acid of general formula (I) 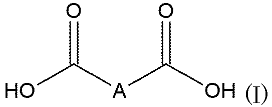 in which A represents a covalent bond or a hydrocarbon-based group including at least 1 carbon atom, which is optionally substituted, and which is optionally interrupted with one or more heteroatoms, an imidazole of general formula (II) 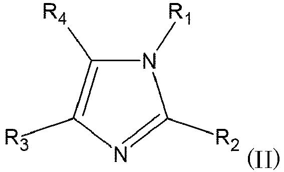 in which:
- R₁ represents a hydrocarbon-based group or a hydrogen atom,
- R₂ represents a hydrocarbon-based group,
- R₃ and R₄ represent, independently of each other, a hydrogen atom or a hydrocarbon-based group, or alternatively R₃ and R₄ form, together with the carbon atoms of the imidazole ring to which they are attached, a ring,
and at least one phenolic compound of general formula (III) 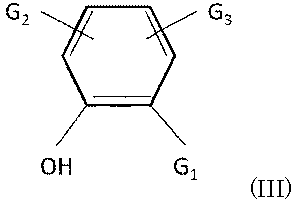 in which:
- G₁ represents a hydroxyl, carboxyl, hydrogenocarbonyl or amino group or an aminoalkyl radical;
- G₂ and G₃ represent, independently of each other, a hydrogen atom or a group chosen from carboxyl, hydrogenocarbonyl and hydroxyl groups, or a radical chosen from alkyl, cycloalkylalkyl, aryl, aralkyl, aryloxy, alkoxy, carboxylalkyl, carbonylalkyl, alkylcarbonyl, arylcarbonyl and aminoalkyl radicals;
the aromatic nucleus of said phenolic compound of general formula (III) being substituted with at least a carboxyl group, a hydrogenocarbonyl group, an amino group or an aminoalkyl radical.

2. Composition according to the preceding claim, in which G₂ and G₃ represent, independently of each other, a hydrogen atom or a group chosen from carboxyl, hydrogenocarbonyl and hydroxyl groups, or an alkoxy radical.

3. Composition according to either of the preceding claims, in which G₂ and G₃, independently of each other, are either a hydrogen atom, or comprise from 1 to 10 carbon atoms.

4. Composition according to one of the preceding claims, in which G₁ is a hydroxyl group and G₂ is a hydroxyl group or a hydrogen atom.

5. Composition according to Claim 1, in which G₁ is a carboxyl group and G₂ is a hydrogen atom.

6. Composition according to Claim 5, in which G₃ is a hydrogen atom.

7. Composition according to Claim 5, in which G₃ is a hydroxyl group.

8. Composition according to one of Claims 1 to 5, in which said aminoalkyl radical comprises from 1 to 15 carbon atoms.

9. Composition according to one of the preceding claims, in which the molar mass of said phenolic compound is less than 1000 g/mol.

10. Composition according to one of the preceding claims, in which the content of phenolic compound is between 0.1 and 25 phr.

11. Rubber composition according to any one of the preceding claims, in which the content of polyacid is within a range extending from 0.2 to 100 phr and preferably from 0.2 to 50 phr.

12. Rubber composition according to any one of the preceding claims, in which the reinforcing filler includes carbon black, silica or a mixture of carbon black and silica.

13. Rubber composition according to any one of the preceding claims, in which the content of reinforcing filler is between 20 and 200 phr.

14. Composite based at least on a component and on a composition according to one of Claims 1 to 13.

15. Tyre comprising a composition according to one of Claims 1 to 13 or a composite according to Claim 14.
